# EUROPÄISCHE PATENTSCHRIFT

(11) **EP 2 455 156 B1**
(45) Veröffentlichungstag und Bekanntmachung des Hinweises auf die Patenterteilung: **05.06.2013**
(21) Anmeldenummer: 10191672.4
(22) Anmeldetag: 18.11.2010
(51) Int. Cl.: B01F 17/00, C08F 2/26

(54) **Niedrigviskose wäßrige Zusammensetzungen**
Low viscosity aqueous compounds
Compositions aqueuses à viscosité réduite

(43) Veröffentlichungstag der Anmeldung: 23.05.2012
(73) Patentinhaber: Cognis IP Management GmbH, 40589 Düsseldorf (DE)
(72) Erfinder: Schliwka, Thomas, 51427 Bergisch Gladbach (DE); Klagge, Rolnald, 40699 Erkrath (DE); Held, Uwe, 42553 Velbert (DE); Mausberg, Thomas, 42781 Haan (DE)

(56) Entgegenhaltungen:
- EP-A1- 1 318 157
- EP-A1- 2 239 276
- EP-A2- 0 391 392

## Beschreibung

### Gebiet der Erfindung

Die Erfindung liegt auf dem Polymersektor und betrifft niedrigviskose wässrige Zusammensetzungen sowie deren Verwendung in der Emulsionspolymerisation.

### Stand der Technik

Fettalkoholethersulfate, die anionische Tenside sind, zeigen in wäßriger Lösung in Konzentrationen oberhalb von etwa 30 Gew.-% das Phänomen, Gelphasen auszubilden, was mit einem erheblichen Zuwachs der Viskosität verbunden ist. Dabei treten regelrechte "Gelblöcke" auf, d.h. diese Systeme liegen als feste Gele vor. Dies ist für zahlreiche Anwendungen unerwünscht, insbesondere ist mit diesen Gelphase verbunden, dass diese wäßrigen Fettalkoholethersulfate nicht mehr flüssig und ergo nicht mehr leicht handhabbar sind.

Entsprechende Emulgatoren sind aus EP-A-1 318 157, EP-A-2 239 276 und EP-A-0 391 392 bekannt.

### Beschreibung der Erfindung

Der vorliegenden Erfindung lag die Aufgabe zugrunde, wäßrige Zusammensetzungen bereitzustellen, die einen hohen Anteil an Fettalkoholethersulfaten enthalten und die bei 20°C gleichwohl flüssig sind. Dabei wird im Rahmen der vorliegenden Erfindung unter flüssig verstanden, dass die wässrigen Zusammensetzungen eine Viskosität von 3000 mPas oder weniger und insbesondere 1000 mPas oder weniger aufweisen (Brookfield-Viskosität der Zusammensetzung gemessen bei 20 °C und Spindel 2 bei 20 rpm).

Gegenstand der Erfindung sind zunächst wäßrige Zusammensetzungen, die bei 20 °C eine Brookfield-Viskosität von 3000 mPas oder weniger (gemessen bei 20 °C und Spindel 2 bei 20 rpm) aufweisen und die Verbindungen der allgemeinen Formel (III)

R-O-(EO)ₚX (III)

und Verbindungen der allgemeinen Formel (IV)

CH₂=CH-CH₂-O-(EO)_{q-}X (IV)

enthalten, worin bedeuten
- R einen Alkylrest mit 8 bis 18 C-Atomen, der gesättigt oder ungesättigt, geradkettig oder verzweigt sein kann,
- X eine Sulfat- oder Phosphatgruppe, wobei die Sulfat- bzw. Phosphatgruppe X in neutralisierter Form vorliegt,
- (EO) eine Ethylenoxidgruppe,
- p eine Zahl im Bereich von 2 bis 100 und
- q eine Zahl im Bereich von 2 bis 100,
   mit der Maßgabe, dass die wäßrige Zusammensetzung die Verbindungen (III) in einer Menge von mindestens 35 Gew.-% - bezogen auf die gesamte Zusammensetzung - enthält und der weiteren Maßgabe, dass die wäßrige Zusammensetzung die Summe der Verbindungen (III) und (IV) in einer Menge im Bereich von 35 bis 70 Gewichtsprozent - bezogen auf die gesamte Zusammensetzung - enthält,
   wobei diese Zusammensetzungen hergestellt werden, indem man in einem ersten Schritt (i) eine Mischung der Verbindungen der allgemeinen Formel (I)

   R-O-(EO)ₙH (I)

   und Verbindungen der allgemeinen Formel (II)

   CH₂=CH-CH₂-O-(EO)ₘ-H (II)

   worin bedeuten
- R einen Alkylrest mit 8 bis 18 C-Atomen, der gesättigt oder ungesättigt, geradkettig oder verzweigt sein kann,
- (EO) eine Ethylenoxidgruppe,
- n eine Zahl im Bereich von 0 bis 30 und
- m eine Zahl im Bereich von 0 bis 30,
   mit der Maßgabe, dass die Verbindungen (I) in der Mischung der Verbindungen (I) und (II) in einem Anteil von mindestens 60 Gew.-% - bezogen auf die gesamte Mischung (I) und (II) - vorliegt, in der Weise gemeinsam ethoxyliert, dass der mittlere Ethoxylierungsgrad der Verbindungen (I) und (II) um jeweils mindestens zwei EO-Einheiten pro Molekül angehoben wird,
   wobei ein Zwischenprodukt (Z) erhalten wird, das eine Mischung der Verbindungen der allgemeinen Formel (I*)

   R-O-(EO)ᵣH (I*)

   und Verbindungen der allgemeinen Formel (II*)

   CH₂=CH-CH₂-O-(EO)ₛ-H (II*)

   darstellt, worin bedeuten
- R einen Alkylrest mit 8 bis 18 C-Atomen, der gesättigt oder ungesättigt, geradkettig oder verzweigt sein kann,
- (EO) eine Ethylenoxidgruppe,
- r eine Zahl im Bereich von 2 bis 100 und
- s eine Zahl im Bereich von 2 bis 100,
und sodann das in Schritt (i) erhaltene Zwischenprodukt (Z)
in einem zweiten Schritt (ii) durch Sulfatierung bzw. Phosphatierung und anschließende Neutralisation in eine wäßrige Zusammensetzung enthaltend die Verbindungen (III) und (IV) überführt.

Die Neutralisation der in Schritt (ii) entstehenden Sulfat- bzw. Phosphatgruppen kann beispielsweise mit wäßrigen Alkali- oder Erdalkalihydroxiden wie Natrium-, Kalium-, Calcium- oder Magnesiumhydroxid geschehen. Auch wäßriger Ammoniak kann zur Neutralisation eingesetzt werden.

Die Verbindungen (I) und (II) können nach allen dem Fachmann bekannten Methoden hergestellt werden, typischerweise durch Umsetzung des entsprechenden Alkohols mit Ethylenoxid in Gegenwart eines Ethoxylierungs-Katalysators. Dies sei am Beispiel der Verbindungen (II) durch folgendes Schema verdeutlicht:

CH₂=CH-CH₂-OH + m(EO) → CH₂=CH-CH₂-O-(AO)ₘ-H

Im Hinblick auf den Index m gilt - der obigen Feststellung entsprechend -, dass es sich hier um einen (statistischen) Mittelwert handelt; so bedeutet für CH₂=CH-CH₂-O-(AO)ₘ-H die Aussage m = 1, dass man 1 mol Allylalkohol 1 mol Ethylenoxid umgesetzt hat, m = 2 bedeutet, dass man 1 mol Allylalkohol mit 2 mol Ethylenoxid umgesetzt hat, m = 6 bedeutet, dass man 1 mol Allylalkohol mit 6 mol Ethylenoxid umgesetzt hat, usw. Mithin repräsentiert der Index m das molare Umsetzungsverhältnis von Allylakohol und eingesetztem Ethylenoxid, wobei die Allylalkoholethoxylate sich je nach eingesetztem Katalysator in der Homologenverteilung unterscheiden können.

Das hier für die Verbindungen (II) Ausgeführte gilt ganz analog auch für die Verbindungen (I).

Ein weiterer Erfindungsgegenstand ist die Verwendung der oben genannten Zusammensetzungen als Emulgatoren in der Emulsionspolymerisation olefinisch ungesättigter Monomere. Dabei können im Prinzip alle sämtlichen technisch wichtigen, im wesentlichen wasserunlöslichen Monomeren eingesetzt werden, vorzugsweise aber (Meth)acryl-, Styrol- und Vinylverbindungen.

Typische Beispiele für diese Monomeren sind Vinylaromaten, z.B. Styrol, Divinylbenzol oder Vinyltoluol, polymerisierbare Olefine und Diolefine wie Propen, Butadien oder Isopren, Ester der Acryl- oder Methacrylsäure mit linearen oder verzweigten Alkoholen mit 1 bis 18 Kohlenstoffatomen, insbesondere von Alkoholen mit 1 bis 8 Kohlenstoffatomen und - besonders bevorzugt - von Methylestern, Ethylestern und Butylestern derselben, Vinylester von Säuren mit 2 bis 12 Kohlenstoffatomen, insbesondere Vinylacetat, Vinylpropionat, Vinyl-2-ethylhexanat und Vinyllaurat, Vinylalkylether mit 1 bis 8 Kohlenstoffatomen aufweisenden Alkylgruppen, Vinylchlorid, Vinylidenchlorid und dergleichen.

Monomere, die ausgewählt sind aus der Gruppe der Alkylacrylate, Styrolacrylate, VeoVa-Verbindungen oder Mischungen hieraus, mit oder ohne Zusatz von Acrylsäure oder Methacrylsäure, sind im Rahmen der vorliegenden Erfindung besonders bevorzugt.

Die Monomeren können in Gegenwart der erfindungsgemäßen Zusammensetzungen homopolymerisiert oder mit anderen der genannten Verbindungen aus der vorstehenden Aufzählung copolymerisiert werden.

Weiterhin ist es auch möglich, im Zuge der Emulsionspolymerisation die erfindungsgemäßen Verbindungen (III) und (IV) in Kombination mit bekannten nichtionischen und/oder anionischen Co-Emulgatoren einzusetzen. Dies kann zu Dispersionen mit erhöhter Stabilität, z.B. gegenüber Scherkräften, Temperatureinflüssen und Elektrolyten führen. Die Co-Emulgatoren werden dabei in Mengen von 0,5 bis 5, vorzugsweise 1 bis 3 Gew.-%, bezogen auf die Gesamtheit der eingesetzten Monomere, zugegeben. Dabei ist es möglich, die Co-Emulgatoren zu Beginn der Polymerisation zusammen mit den Emulgatoren vorzulegen oder sie im Verlauf der Polymerisation zuzudosieren. Eine weitere Variante sieht vor, eine Präemulsion unter Verwendung oder Mitverwendung der Co-Emulgatoren herzustellen und diese im Verlauf der Polymerisation zuzudosieren. Es ist auch möglich, zur Nachstabilisierung der unter Verwendung der erfindungsgemäßen Acrylsäure- und/oder Methacrylsäureester erhaltenen Dispersionen diese mit Co-Emulgatoren zu versetzen.

Die durch die Verwendung der erfindungsgemäßen Zusammensetzungen durch Emulsionspolymerisation zugänglichen Latices können beispielsweise in der Beschichtungsindustrie eingesetzt werden.

### Eingesetzte Verbindungen:

**Disponil LS 10:** Anlagerungsprodukt von 10 mol Ethylenoxid an 1 mol eines C12/12-Alkohols (Fa. Cognis)

**Breox AA E 450:** Anlagerungsprodukt von 10 mol Ethylenoxid an 1 mol Allylalkohol (Fa. Cognis)

### Beispiel 1: Herstellung Emulgator

### Schritt (i) = Ethoxylierung

649g (1,0236 mol) Disponil LS 10 und 661g (1,46888 mol) Breox AA E 450 wurden mit 2190g (49,77 mol) Ethylenoxid (EO) versetzt. Das Gemisch wurde in einem Autoklaven in Gegenwart von 1,75g KOH(s) (Katalysator) für 3 Stunden bei einer Temperatur von 120-125°C gehalten. Das erhaltene Ethoxylierungsprodukt (Zwischenprodukt Z)wurde im nachfolgend beschriebenen Schritt (ii) eingesetzt.

### Schritt (ii) = Sulfatierung

608,4g/h (0,4880 mol/h) des in Schritt (i) erhaltenen Ethoxylierungsproduktes (Zwischenprodukt Z) wurden mit 163,6g/h (1,3293 mol/h) Oleum in einem kontinuierlihem Sulfatierungsprozess im Labormaßstab verestert. Der genannte Stoffmengenstrom entspricht einem Reaktionsverhältnis von 1 mol Alkoholethoxylat zu 1,15 mol Oleum. Um einen ausreichenden SO₃-Strom zu erzeugen, wurde ein Stickstoffstrom (N₂) von 720 ltr/h eingestellt. Die Temperatur des Reaktors betrug während der Sulfatierung 70°C, die Rohstoffe wurden auf 60°C vorgeheizt. Der erhaltene saure Ester wurde in eine alkalische Lösung eingerührt. Als alkalische Lösung wurde eine Mischung von 55g NaOH (50%ig) und 301,2g Wasser verwendet. In Summe wurde eine Gesamtmenge von 972,6g saurem Ester in die alkalische Lösung eingerührt. Daraus berechnete sich ein Massenanteil an neutralisiertem Ester (Seife) von 75,3 Gew.-% (der Massenanteil bezieht sich darauf, was an saurem Ester R-SO₃H mittels der Laugenlösung zu R-SO₃Na neutralisiert wurde. Das gibt den gesamten Trockenrückstand an und ist ein berechneter Wert der gut mit analytisch ermittelten Wert "Trockenrückstand 4h/105°C" (siehe Tabelle) übereinstimmt. Die Berechnung erfolgte folgendermaßen: NaOH: 55g / saurer Ester: 972,6g / H₂O: 301,2g / Summe (Gesamtmasse) = 1328,8g Masse Seife = 972,6 +(55*0,5) g =1000,1 g
Massenanteil Seife in Gew.% = Masse Seife / Gesamtmasse = 1000,1g * 100/1328,8g)

Anschließend erfolgte eine Filtration. Die Kenndaten des erhaltenen Aniontensids sind der folgenden Tabelle zu entnehmen:

| | |
|---|---|
| Epton Titration | 4,2% |
| Trockenrückstand im Ofen 4 Stunden bei 105°C | 75,8 Gew.-% |
| Natriumsulfat (Dithizon Methode) | 0,12 Gew.-% |
| pH 10% | 7,0-9,5 |
| Iodzahl nach Kaufmann | 6,52 |
| Unsulfatierte Anteile | 9,0 Gew.-% |
| Viskosität (Brookfield @ 24°C) | 690 mPas |

Das in Beispiel 1 hergestellte Aniontensid wurde in den nachstehend beschriebenen Anwendungsbeispielen (Beispiele 2 und 3) eingesetzt.

### Anwendungsbeispiele

Die nachfolgenden Beispiele demonstrieren den Einsatz des Emulgators gemäß Beispiel 1 in der Emulsionspolymerisation. Dabei wurden verschiedenen Monomersysteme eingesetzt, mämlich:
- Styrol-Acyrlat **(S-Ac)**
- Vinylacetat-Butylacrylat **(Vac-BA)**
- VeoVa9/10-Acrylat **(VeoVa-Ac)**

### Beispiel 2

Es wurden 2.5g Kaliumperoxodisulfat in 97,5g Wasser gelöst. Diese Lösung wurde als Reaktorlösung verwendet. Die Monomere 235g Styrol, 235g Butylacrylat und 7,5g Methacrylsäure wurden vermischt und anschließend in eine Lösung aus 22,3g des gemäß Beispiel 1 hergestellten Emulgators (Aniontensidgehalt 56%), 277,7 g Wasser, 7',5g Acrylamid und 15,0g Methylolacrylamid eingerührt. Diese Lösung wurde als Preemulsion bezeichnet. Weiter wurde eine Lösung aus 2,5g Natriumbisulfit und 97,5g Wasser eingewogen, diese wurde als Initiatorlösung bezeichnet.

### Durchführung:

Der Reaktor war so zusammengebaut, dass der Rührer nicht an der Glaswandung kratzte. Die Reaktorlösung wurde in einem Becherglas angesetzt und in den Reaktor überführt. Im Anschluss wurden 150mL der Preemulsion zugegeben und die gesamte Apparatur für 15 Minuten mit Stickstoff gespült. Der Stickstoffstrom wurde über die gesamte Dauer des Versuches aufrechterhalten. Der Thermostat wurde auf eine Temperatur von 63°C gebracht. Bei 60°C wurden 5ml der Initiatorlösung in den Reaktor getropft, um die Reaktion zu starten. Als die Temperatur auf 63°C gestiegen war wurde mit der kontinuierlichen Dosierung begonnen. Die Dosierzeit betrug 150 Minuten. Nach beendeter Dosierung wurde noch für weitere 60 Minuten bei einer um 3°C erhöhten Temperatur nachpolymerisiert. Nach beendeter Reaktion wurde der Inhalt auf < 30°C abgekühlt und mit 3,7g Ammoniak (w = 0,125) auf einen pH-Wert im Bereich von 8,0 - 9,0 eingestellt. Die Dispersion wurde durch einen tarierten Filterbeutel in ein 1000mL Schraubdeckelglas filtriert. Man wusch den Filter gründlich mit destilliertem Wasser aus und ermittelte nach 24-stündigem Trocknen bei 50°C die Masse an freiem Koagulat. Die erhaltene Polymerdispersion hatte einen Feststoffgehalt von 49,5%. Der Koagulatanteil betrug 0,31%. Die Teilchengröße betrug 194 nm, die Viskosität lag bei 690 mPas.

### Beispiel 3

Es wurden 1,17g Kaliumperoxodisulfat in 150g Wasser gelöst. Diese Lösung wurde als Reaktorlösung verwendet. Die Monomere 370,9g Vinylacetat, 157,4g Butylacrylat und 5,3g Acrylsäure wurden vermischt und anschließend in eine Lösung aus 19g des gemäß Beispiel 1 hergestellten Emulgators (Aniontensidgehalt 56%), 296,1 g Wasser und 0,5g Borax eingerührt. Diese Lösung wurde als Preemulsion bezeichnet.

### Durchführung

Der Reaktor war so zusammengebaut, dass der Rührer nicht an der Glaswandung kratzte. Die Reaktorvorlage wurde in einem Becherglas angesetzt und in den Reaktor überführt. 90 ml der Preemulsion wurden in den Reaktor gegeben. Im Anschluss wurde die gesamte Apparatur für 15 Minuten mit Stickstoff gespült. Der Stickstoffstrom wurde über die gesamte Dauer des Versuches aufrechterhalten. Der Thermostat wurde auf eine Temperatur von 73°C gebracht. Bei 70°C wurde mit der kontinuierlichen Dosierung begonnen. Die Dosierzeit betrug 200 Minuten und die Temperatur wurde im Bereich von 70 - 75 °C gehalten. Nach beendeter Dosierung wurde noch für weitere für weitere 30 Minuten bei 75°C nachpolymerisiert. Nach beendeter Reaktion wurde der Inhalt auf < 40°C abgekühlt und mit 12g Ammoniak (w = 0,125) auf einen pH-Wert im Bereich von 7,0 - 8,0 eingestellt. Die erhaltene Polymerdispersion hatte einen Feststoffgehalt von 53,8%. Der Koagulatanteil betrug 1,65%. Die Teilchengröße betrug 241nm, die Viskosität lag bei 250mPas.

### Beispiel 4

Es wurden 0,47g Kaliumperoxodisulfat, 8,43g des gemäß Beispiel 1 hergestellten Emulgators (Aniontensidgehalt 56%) in 253,69g Wasser gelöst. Diese Lösung wurde als Reaktorlösung verwendet. Die Monomere 142g VeoVa10, 71g VeoVa9, 151,5g Methacrylat, 94,7g Butylacrylat und 14,2g Acrylsäure wurden vermischt und anschließend in eine Lösung aus 8,43g des gemäß Beispiel 1 hergestellten Emulgators (Aniontensidgehalt 56%), 253,7 g Wasser und 1,8g Kaliumperoxodisulfat, eingerührt. Diese Lösung wurde als Preemulsion bezeichnet.

### Durchführung:

Die Reaktorvorlage wurde in einem 250mL Becherglas angesetzt und in den Reaktor überführt. Man gab 20mL der Preemulsion in den Reaktor. Im Anschluss wurde die gesamte Apparatur für 15 Minuten mit Stickstoff gespült. Der Stickstoffstrom wurde über die gesamte Dauer des Versuches aufrechterhalten. Der Thermostat wurde ohne Zirkulation auf eine Temperatur von 85°C aufgeheizt. Die Reaktorvorlage wurde gefüllt, die Preemulsion angesetzt (zuerst Wasser, dann Monomer), anschließend wurde im Kreis gepumpt und nach fünf Minuten wurden 20ml abgezapft. Der Reaktor wurde auf 80°C aufgeheizt und die abgezapften 20ml bei 80°C Reaktortemperatur zugeführt. Die Reaktionstemperatur stieg nach fünf Minuten auf ein Maximum von ca. 84°C an. Nun wurde mit der kontinuierlichen Dosierung begonnen, die sich auf 180 Minuten erstreckte. Anschießend erfolgte eine Nachpolymerisierung von 60 Minuten. Nach beendeter Reaktion wurde der Inhalt auf < 40°C abgekühlt und mit 10g Ammoniak (w = 0,125) auf einen pH-Wert im Bereich von 7,0 - 9,0 eingestellt. Die erhaltene Polymerdispersion hatte einen Feststoffgehalt von 48%. Der Koagulatanteil betrug 0,5%. Die Teilchengröße betrug 168nm, die Viskosität lag bei 1950mPas.

## Patentansprüche

1. Wässrige Zusammensetzungen, die bei 20 °C eine Brookfield-Viskosität von 3000 mPas oder weniger (gemessen bei 20 °C und Spindel 2 bei 20 rpm) aufweisen und die Verbindungen der allgemeinen Formel (III)
R-O-(EO)ₚX (III)
und Verbindungen der allgemeinen Formel (IV)
CH₂=CH-CH₂-O-(EO)_{q}-X (IV)
enthalten, worin bedeuten
• R einen Alkylrest mit 8 bis 18 C-Atomen, der gesättigt oder ungesättigt, geradkettig oder verzweigt sein kann,
• X eine Sulfat- oder Phosphatgruppe, wobei die Sulfat- bzw. Phosphatgruppe X in neutralisierter Form vorliegt,
• (EO) eine Ethylenoxidgruppe,
• p eine Zahl im Bereich von 2 bis 100 und
• q eine Zahl im Bereich von 2 bis 100,
mit der Maßgabe, dass die wäßrige Zusammensetzung die Verbindungen (III) in einer Menge von mindestens 35 Gew.-% - bezogen auf die gesamte Zusammensetzung - enthält und der weiteren Maßgabe, dass die wäßrige Zusammensetzung die Summe der Verbindungen (III) und (IV) in einer Menge im Bereich von 35 bis 70 Gewichtsprozent - bezogen auf die gesamte Zusammensetzung - enthält,
wobei diese Zusammensetzungen hergestellt werden, indem man in einem ersten Schritt (i) eine Mischung der Verbindungen der allgemeinen Formel (I)
R-O-(EO)ₙH (I)
und Verbindungen der allgemeinen Formel (II)
CH₁=CH-CH₁-O-(EO)ₘ-H (II)
worin bedeuten
• R einen Alkylrest mit 8 bis 18 C-Atomen, der gesättigt oder ungesättigt, geradkettig oder verzweigt sein kann,
• (EO) eine Ethylenoxidgnlppe,
• n eine Zahl im Bereich von 0 bis 30 und
• m eine Zahl im Bereich von 0 bis 30,
mit der Maßgabe, dass die Verbindungen (I) in der Mischung der Verbindungen (I) und (II) in einem Anteil von mindestens 60 Gew.-% - bezogen auf die gesamte Mischung (I) und (II) - vorliegt, in der Weise gemeinsam ethoxyliert, dass der mittlere Ethoxylierungsgrad der Verbindungen (I) und (II) um jeweils mindestens zwei EO-Einheiten pro Molekül angehoben wird,
wobei ein Zwischenprodukt (Z) erhalten wird, das eine Mischung der Verbindungen der allgemeinen Formel (I*)
R-O-(EO)ᵣH (I*)
und Verbindungen der allgemeinen Formel (II*)
CH₂=CH-CH₂-O-(EO)ₛ-H (II*)
darstellt, worin bedeuten
• R einen Alkylrest mit 8 bis 18 C-Atomen, der gesättigt oder ungesättigt, geradkettig oder verzweigt sein kann,
• (EO) eine Ethylenoxidgruppe,
• r eine Zahl im Bereich von 2 bis 100 und
• s eine Zahl im Bereich von 2 bis 100,
und sodann das in Schritt (i) erhaltene Zwischenprodukt (Z)
in einem zweiten Schritt (ii) durch Sulfatierung bzw. Phosphatienmg und anschlie-βende Neutralisation in eine wäßrige Zusammensetzung enthaltend die Verbindungen (III) und (IV) überführt.

2. Verwendung von Zusammensetzungen nach Anspruch 1 als Emulgatoren in der Emulsionspolymerisation olefinisch ungesättigter Monomere.

## Claims

1. Aqueous compositions having at 20°C a Brookfield viscosity of 3000 mPas or less (measured at 20°C with spindle 2 at 20 rpm) and comprising compounds of the general formula (III)
R-O-(EO)ₚX (III)
and compounds of the general formula (IV)
CH₂=CH-CH₂-O-(EO)_{q}-X (IV)
in which
• R is an alkyl radical having 8 to 18 C atoms, which may be saturated or unsaturated, straight-chain or branched,
• X is a sulfate or phosphate group, the sulfate or phosphate group X being in neutralized form,
• (EO) is an ethylene oxide group,
• p is a number in the range from 2 to 100, and
• q is a number in the range from 2 to 100,
with the proviso that the aqueous composition comprises the compounds (III) in an amount of at least 35% by weight, based on the overall composition, and with the further proviso that the aqueous composition comprises the sum of the compounds (III) and (IV) in an amount in the range from 35 to 70 percent by weight, based on the overall composition,
these compositions being prepared by in a first step (i), jointly ethoxylating a mixture of the compounds of the general formula (I)
R-O-(EO)ₙH (I)
and compounds of the general formula (II)
CH₂=CH-CH₂-O-(EO)ₘ-H (II)
in which
• R is an alkyl radical having 8 to 18 C atoms, which may be saturated or unsaturated, straight-chain or branched,
• (EO) is an ethylene oxide group,
• n is a number in the range from 0 to 30, and
• m is a number in the range from 0 to 30,
with the proviso that the compounds (I) are present in the mixture of the compounds (I) and (II) in a proportion of at least 60% by weight, based on the overall mixture (I) and (II), in such a way that the average degree of ethoxylation of the compounds (I) and (II) is raised by in each case at least two EO units per molecule, to give an intermediate (Z) which represents a mixture of the compounds of the general formula (I*)
R-O-(EO)ᵣH (I*)
and compounds of the general formula (II*)
CH₂=CH-CH₂-O-(EO)ₛ-H (II*)
in which
• R is an alkyl radical having 8 to 18 C atoms, which may be saturated or unsaturated, straight-chain or branched,
• (EO) is an ethylene oxide group,
• r is a number in the range from 2 to 100, and
• s is a number in the range from 2 to 100,
and then converting the intermediate (Z) obtained in step (i)
in a second step (ii), by sulfation or phosphation and subsequent neutralization, into an aqueous composition comprising the compounds (III) and (IV).

2. Use of compositions according to Claim 1 as emulsifiers in the emulsion polymerization of olefinically unsaturated monomers.

## Revendications

1. Compositions aqueuses, qui présentent à 20 °C une viscosité de Brookfield de 3 000 mPas ou moins (mesurée à 20 °C et à un fuseau de 2 à 20 tours/min) et qui contiennent des composés de formule générale (III)
R-O-(EO)ₚX (III)
et des composés de formule générale (IV)
CH₂=CH-CH₂-O-(EO)_{q}-X (IV)
dans lesquelles
- R signifie un radical alkyle contenant 8 à 18 atomes C, qui peut être saturé ou insaturé, linéaire ou ramifié,
- X signifie un groupe sulfate ou phosphate, le groupe sulfate ou phosphate X se présentant sous forme neutralisée,
- (EO) signifie un groupe oxyde d'éthylène,
- p signifie un nombre dans la plage allant de 2 à 100, et
- q signifie un nombre dans la plage allant de 2 à 100, à condition que la composition aqueuse contienne les composés (III) en une quantité d'au moins 35 % en poids, par rapport à la composition totale, et à l'autre condition que la composition aqueuse contienne la somme des composés (III) et (IV) en une quantité dans la plage allant de 35 à 70 pour cent en poids, par rapport à la composition totale,
ces compositions étant fabriquées par
lors d'une première étape (i), l'éthoxylation commune d'un mélange des composés de formule générale (I)
R-O-(EO)nH (I)
et de composés de formule générale (II)
CH₂=CH-CH₂-O-(EO)ₘ-H (II)
dans lesquelles
- R signifie un radical alkyle contenant 8 à 18 atomes C, qui peut être saturé ou insaturé, linéaire ou ramifié,
- (EO) signifie un groupe oxyde d'éthylène,
- n signifie un nombre dans la plage allant de 0 à 30, et
- m signifie un nombre dans la plage allant de 0 à 30,
à condition que les composés (I) soient présents dans le mélange des composés (I) et (II) en une proportion d'au moins 60 % en poids, par rapport au mélange total de (I) et (II), de manière à ce que le degré d'éthoxylation moyen des composés (I) et (II) soit augmenté à chaque fois d'au moins deux unités EO par molécule,
un produit intermédiaire (Z) étant obtenu, qui est un mélange des composés de formule générale (I*)
R-O-(EO)rH (I*)
et de composés de formule générale (II*)
CH₂=CH-CH₂-O- (EO)ₛ-H (II*)
dans lesquelles
- R signifie un radical alkyle contenant 8 à 18 atomes C, qui peut être saturé ou insaturé, linéaire ou ramifié,
- (EO) signifie un groupe oxyde d'éthylène,
- r signifie un nombre dans la plage allant de 2 à 100, et
- s signifie un nombre dans la plage allant de 2 à 100, puis la transformation du produit intermédiaire (Z) obtenu à l'étape (i)
lors d'une seconde étape (ii) par sulfatation ou phosphatation, puis neutralisation, en une composition aqueuse contenant les composés (III) et (IV).

2. Utilisation de compositions selon la revendication 1 en tant qu'émulsifiants dans la polymérisation en émulsion de monomères oléfiniquement insaturés.
